**Europäisches Patentamt**

**European Patent Office**

**Office européen des brevets**

(19)

(11) Publication number: **0 373 337**

**A1**

## (12) EUROPEAN PATENT APPLICATION

(21) Application number: **89120290.5**

(22) Date of filing: **02.11.89**

(51) Int. Cl.⁵: **B60R 25/04**

(30) Priority: **15.11.88 IT 8368088**

(43) Date of publication of application:
**20.06.90 Bulletin 90/25**

(84) Designated Contracting States:
**AT BE CH DE ES FR GB GR IT LI LU NL SE**

(71) Applicant: **DELTA ELETTRONICA s.p.a.**
**Via Astico 41**
**I-21100 Varese (VA)(IT)**

(72) Inventor: **Memmola, Serafino**
**41, Via Astico**
**I-21100 Varese(IT)**

(74) Representative: **Ferraiolo, Ruggero et al**
**Via Napo Torriani, 10**
**I-20124 Milano(IT)**

(54) **Antitheft apparatus.**

(57) Antitheft apparatus in which the central box (III) comprises in addition to the central operating module (IIIa) also a central control module (IIIb) for the actuators, suitable to transmit coded controls to the actuators for their arming and disarming, and each actuator is equipped with a peripheric control module (IVa, IVb, IVc) suitable to recognize the coded control and in consequence to control or not the arming or disarming of the security actuator.

FIG.1

FIG.2

# Antitheft apparatus

The present invention refers to an antitheft apparatus, and in particular to an antitheft apparatus for vehicles.

Till now many types of antitheft apparatus have been realized, and also very sophisticated, but there exist still parts of said apparatus not completely protected, which could be attacked by expert thefts. In fact the conductors, which carry the arming controls from the central box of the apparatus installed on the vehicle to the single security actuators, that is those devices which realize the security, as for istance the locking of the motor with the disabling of the electric circuits essential to its running, or the locking bonnet device, and other possible security devices, can be reached by very expert thefts, who could then applying a positive or a negative to said conductors control the disarming of the actuators.

Aim of the present invention is that to eliminate said gap, realizing an antitheft apparatus in which also said parts are protected.

The antitheft apparatus for vehicles in conformity with this invention, which comprises generally at least a module for the operating of the apparatus, called also central box, one or more peripheric alarm sensors and two or more security actuators, that is members which realize the security, as for instance the bonnet-locks, the essential electric circuits of the engine locking devices, the injection pump valves locking devices, and the likes, comprehends moreover a central module for controlling the actuators, joined to the central box, constituted by such an electronic circuit, that is comprehending such components and connected each to other in such a way, to be suitable to send, when it receives from the central operating module of the control of arming of the actuators, a coded control message of the actuator or actuators, and each of said actuators in turn is equipped with a peripheric control module, constituted by such an electronic circuit, that is comprehending such components and connected each to other in such a way, to be suitable to receive said coded message, to compare it with the code by itself memorized, equal to that of the central control module of the actuators, and if corresponding to control the arming of the actuator.

In an improvement of the previous embodiment the central control module of the actuators is suitable to emit two messages, coded in a different way each to other, one for controlling the arming of the actuators and one for controlling the disarming of the sames and the peripheric control modules are suitable in turn to compare the input message with the two memorized messages and then to control, after recognition of the message, the arming or disarming of the actuator.

In a preferred embodiment the transmission of the message from the central control module to the peripheric modules is performed by wire.

In a further preferred embodiment the electronic circuit of the central module of the actuators is such, that is it comprehends also such components and connected each to other in such a way, to be suitable to send the coded message or messages by radio and the peripheric control modules are such, that is they comprehend such components and connected each to other in such a way, to be suitable to receive the radio messages and to compare them with the memorized message or messages, and after recognition to control the arming or the disarming of the actuator.

In a further embodiment similar to the previous ones the central box is equipped with more central control modules of the actuators, one for each actuator, and therefore each of said central modules is suitable to send the coded control messages only to the corresponding peripheric control module of the respective actuator.

For better explaining the object of the present invention it will be described an embodiment simply as an example referring to the enclosed drawings, in which:

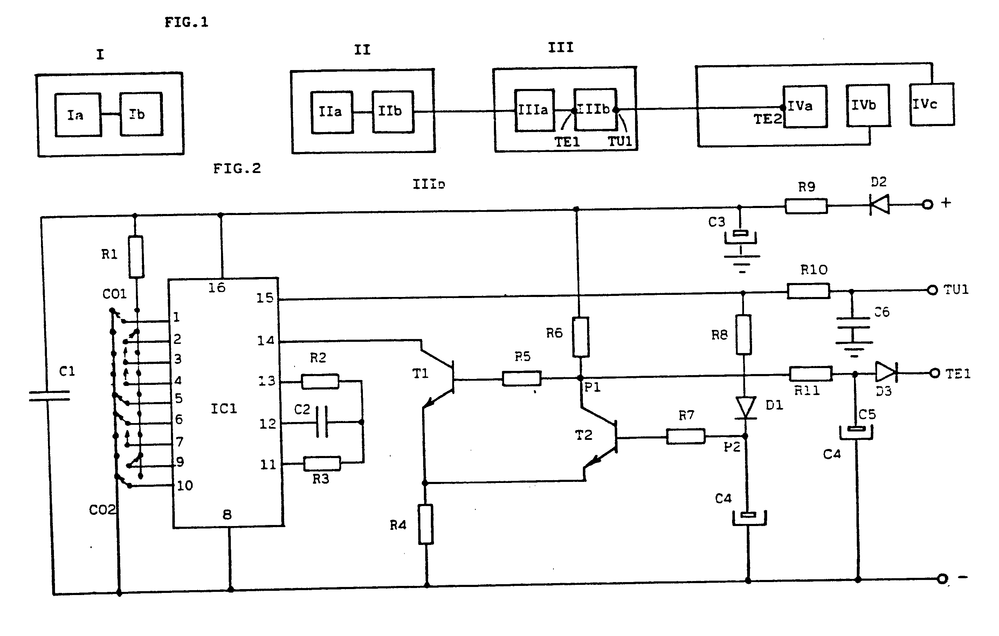

- figure 1 is a block scheme;

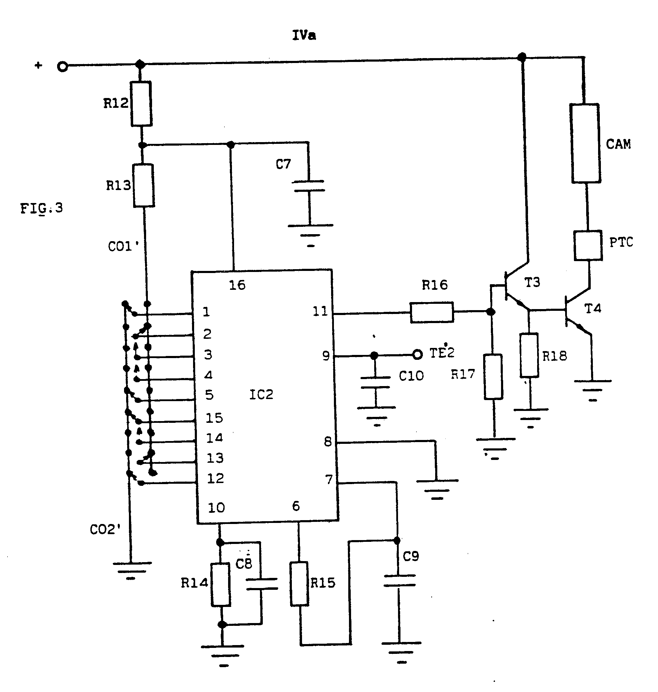

- figures 2 and 3 are electronic schemes.

The antitheft apparatus for vehicle of the example comprehends a remote control device I, constituted by an encoding section Ia with micro-battery and actuating push-button, and a radio transmitting section Ib, a receiving module II installed on the vehicle and comprehending a receiving section IIa and a decoding section IIb, a central box III, comprehending a central operating module IIIa and a central control module IIIb of the actuators, and three peripheric control modules IVa,IVb,IVC of the actuators, that is respectively of the electric locking of the motor, of the bonnet-locking and of the locking of the electric opening of the power roof. We shall describe of said peripheric modules only that of locking of the essential electric circuits of the engine, in that except possibly the output electronic switch of the circuit, constituted in the example by the transistor T4, the other parts of the three modules are identical.

In fact the electronic switch, which allows the supply or not of said locking devices and then their arming or disarming, could be different in relation to the type of the actuator.

The modules I,II and IIIa are not described in that they are well known to the state of the art.

The central control module IIIb of the actuators is constituted by the integrated circuit IC1 (MC145026 Motorola Encoder), the pins 1,2,3,4,5,6,7,9,10 of which may be connected either to the positive collector CO1 or to the negative collector CO2 or open.

The pre-arrangement of the connections of said pins determines the encoding of the output messages of IC1.

For keyboard requirements we shall indicate with "O" the ohm and with "nF" the microFarad.

The collector CO1 is connected through the resistor R1 (220 o) to the positive supply line of the module, which in turn is connected to the positive of the battery through the filter constituted by the electrolytic capacitor C3 (1 nF) and by the resistor R9 (1Ko) and the protection diode D2 (1N4004), while the collector CO2 is connected directly to the ground.

The pins 11,12,13 belong to the oscillator section of IC1, which comprehends also R2 (600 Ko), R3 (1,2 Mo) and C2 (680 pF).

IC1 is constantly supplied, infact pin 18 is permanently connected to the positive supply line and pin 8 to that of negative supply, and each to other through the protection capacitor C1 (100 nF).

The transistor T1 (BC182) is turned on by the positive, which through R5 (1 Ko) and R6 (1 Mo) arrives to its base and therefore, being its emitter connected to the negative through R4 (22 Ko), T1 brings with its collector a negative to the enabling pin 4 of IC1. It follows that IC1 emits from pin 15 the coded messages in sequence. Said messages arrive through the filter, constituted by R10 (1 Ko) and C6 (1 nF), to the output terminal TU1, which is connected by wire to the input terminal TE2 of the peripheric control modules of the actuators.

The positive pulses of the messages emitted from pin 15, arriving also through R8 (33 Ko), diode D1 (1N4004) to point P2, charge the electrolytic capacitor C4 (1 nF) and through R7 (270 Ko) arrive to the base of transistor T2 (BC182), causing the turning on of T2, the collector of which becomes negative and brings therefore low the base of T1 which goes off, therefore ceases the negative at pin 14 of IC1, which in consequence is disabled and ceases to emit the messages from pin 15; after the discharge of C4 T2 goes off and therefore T1 goes newly on furnishing the negative to pin 14 and then starts newly the emitting of messages from pin 15 of IC1. It is so caused the emitting of messages with pauses between a group and the following one, the duration of which pauses is determined by the value of the constant R8xC4.

The base of T1 is connected overmore through R5, point P1, the filter R11 (1 ko)-C5 (1 nF) and the protection diode D3 to the imput terminal TE1, connected to the operating module of the antitheft apparatus, in such a way that when the apparatus is disarmed the terminal TE1 is held low and therefore T1 is off and in consequence no control messages come from pin 15; while when the antitheft apparatus is armed TE1 is held high and therefore T1 is free to go on as above described.

The peripheric control module IVa of the electric locking of the engine comprehends the intergrated circuit IC2 (Encoder MC145026 of Motorola). The encoding pins 1,2,3,4,5,15,14,13,12 are connectable to the positive, negative of the collectors $CO1'$ and $CO2''$ or they may remain open as the corresponding encoding pins of the encoder of the central module (IC1), in fact they are pre-arranged exactly with the same connections in order to memorize the same code of the coded messages emitted by IC1. Pin 16 is connected through R12 (1 Ko) to the positive supply line of the battery, to which is also connected $CO1'$ through R12 and R13 (100 o), while pin 8 is connected to ground. Pins 6,7 are connected to the oscillator system of IC2 and are outwardly connected to R15 (180 o) and C9 (10 KpF), while pin 10, corresponding to the features of the output message, is connected to ground through the parallel of R14 (330 Ko) and C8 (100 KpF).

Pin 9 receives the messages transmitted by the central control module IIIb through the terminal TE2, with the protection of C10 (3,3 KpF).

Pin 11 is on the contrary the output pin of IC2 and is connected through R16 and R17 to the base of the control transistor T3 (BC182), equipped with the load resistor R18, which connects to groung its emitter, while the collector is connected to the positive. T3 controls the power transistor T4 (TIP121), which is the electronic switch, which switches off the supply circuit of the essential services of the engine CAM causing so the electric locking of the engine, which without said supply can not run; in fact the collector of T4 is connected to the negative terminal of said circuit CAM through the thermistor PTC (Q63100-P2390-955), while its emitter is connected to ground.

## Claims

1. Antitheft apparatus for vehicles comprising generally at least a module for the operating of the apparatus, called also central box, one or more peripheric alarm sensors and two or more security actuators, that is members which realize the security, as for instance the bonnet-locks, the essential electric circuits of the motor locking devices, the injection pump valves locking devices, and the likes,characterized in that it also comprises a central module for controlling the actuators, joined to the central box, constituted by such an electronic circuit, that is, comprehending such components and connected each to other in such a way, to be suitable to send, when it receives from the central operating module of the control of arming of the actuators, a coded control message of the actuator or actuators, and that each of said actuators in turn is equipped with a peripheric control module, constituted by such an electronic circuit, that is, comprehending such components and connected each to other in such a way, to be suitable to receive said coded message, to compare it with the code by itself memorized, equal to that of the central control module of the actuators, and if corresponding to control the arming of the actuator.

2. Apparatus as from claim 1. characterized in that the central control module of the actuators is suitable to emit two messages, coded in a different way each to other, one for controlling the arming of the actuators and one for controlling the disarming of the sames and the peripheric control modules are suitable in turn to compare the input message with the two memorized messages and then to control, after recognition of the message, the arming or disarming of the actuator.

3. Apparatus as from claims 1. and 2.characterized in that the transmission of the message from the central control module to the peripheric modules is performed by wire.

4. Apparatus as from claim 1. and 2. characterized in that the electronic circuit of the central module of the actuators is such, that is it comprehends also such components and connected each to other in such a way, to be suitable to send the coded message or messages by radio and the peripheric control modules are such, that is they comprehend such components and connected each to other in such a way, to be suitable to receive the radio messages and to compare them with the memorized message or messages, and after recognition to control the arming or the disarming of the actuator.

5. Apparatus as from anyone of the previous claims characterized in that the central box is equipped with more central control modules of the actuators, one for each actuator, and therefore each of said central modules is suitable to send the coded control messages only to the corresponding peripheric control module of the respective actuator.

FIG.1

FIG.2

CAM

PTC

T4

R18

T3

R16

R17

TE2

C10

C9

C7

R15

IC2

11

9

8

7

16

6

1
2
3
4
5
15
14
13
12
10

C8

R14

IVa

R12

R13

CO1'

CO2'

+

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 225 492 (BOSCH)<br>* Figures; page 3, line 26 - page 8, line 1; claim 1 *<br>--- | 1-3 | B 60 R 25/04 |
| Y | FR-A-2 545 632 (LA RADIOTECHNIQUE)<br>* Whole document *<br>--- | 1-3 | |
| A | WO-A-8 805 391 (CHANDLER)<br>* Whole document *<br>--- | 1,3,4 | |
| A | WO-A-8 103 002 (BLAIS AUTO SECURITY)<br>* Figure 1; claims 1,12-14,24,25 *<br>--- | 1,3-5 | |
| A | US-A-4 463 340 (ADKINS)<br>* Whole document *<br>--- | 1,3,5 | |
| A | DE-A-3 507 593 (GTE)<br>* Abstract; page 6, lines 8-27 *<br>--- | 1,3 | |
| A | EP-A-0 105 774 (VERINE)<br>* Whole document *<br>--- | 1,3,4 | TECHNICAL FIELDS SEARCHED (Int. Cl.5) |
| A | FR-A-2 403 914 (LICENCIA PATENT-VERWALTUNGS)<br>* Figure 2; claims 1,2,8,11,12; page 2, line 23 - page 3, line 9 *<br>----- | 1-3 | B 60 R |

The present search report has been drawn up for all claims

| Place of search | Date of completion of the search | Examiner |
|---|---|---|
| THE HAGUE | 26-02-1990 | DUBOIS B.F.J. |

EPO FORM 1503 03.82 (P0401)